# EUROPEAN PATENT SPECIFICATION

(11) **EP 2 355 210 B1**
(45) Date of publication and mention of the grant of the patent: **21.11.2012**
(21) Application number: 10173952.2
(22) Date of filing: 25.08.2010
(51) Int. Cl.: H01M 2/30, H01M 2/02, H01M 2/26

(54) **Rechargeable battery**
Wiederaufladbare Batterie
Batterie rechargeable

(30) Priority: 26.01.2010 KR 20100007043
(43) Date of publication of application: 10.08.2011
(73) Proprietor: SB LiMotive Co., Ltd., Yongin-si Gyeonggi-do (KR)
(72) Inventor: Kim, Myungchul, Gyeonggi-do (KR)
(74) Representative: Gulde Hengelhaupt Ziebig & Schneider

(56) References cited:
- EP-A1- 2 204 863
- WO-A1-2009/142022
- JP-A- 2007 273 626
- US-A- 5 882 362
- US-A1- 2007 232 123

## Description

### Field

Aspects of embodiments of the present invention relate to a rechargeable battery.

### Description of the Related Art

Unlike a primary battery that cannot be recharged, a rechargeable battery is one that can be recharged and discharged. When provided as low-capacity batteries packaged in packs of individual battery cells, rechargeable batteries are used in small, portable electronic devices, such as mobile phones and camcorders. When provided as large-capacity batteries that have several tens of connected battery packs, rechargeable batteries are widely used as power sources for driving motors in hybrid vehicles, etc.

US 5,882,362 A discloses a lithium electrochemical cell including an anode and cathode assembly with the anode connected electrically to a conductive cell casing and an insulated cathode conductor extending through a lid at an end of the casing and connected to a cathode lead near the lid and with a first insulating component for insulating the casing from cell components therein. Further, the cell includes a cap insulated by the insulation component, as well as a seal gasket located between the cap and an electrode terminal.

US 2007232123 A1 discloses a secondary battery comprising an insulation case that includes a recess that receives at least a part of a cap assembly in the insulation case so as minimize unnecessary space between the cap assembly and the insulation case.

JP 2007 273626 A discloses an electronic element, such as a battery, that is covered with a laminate, wherein an electrode terminal member protrudes through the laminate to the exterior. A insulation layer is formed on the internal terminal. The insulation layer contacts the interior surface of the cap plate on one side and the insulation layer on the opposing side.

Rechargeable batteries are manufactured in many different configurations, among which the cylinder-type and prismatic-type configurations can be considered representative. To form such a battery, an electrode assembly, formed with an insulating separator interposed between a positive and a negative electrode plate, is housed together with electrolyte in a case, and a cap plate is installed on the case. Electrode terminals are connected to the electrode assembly and are externally exposed through the cap plate.

Here, certain gaps may be formed between the electrode terminals and the cap plate, so that instances occur where electrolyte leaks through the gaps. When electrolyte leaks through gaps between an electrode terminal and a cap plate, an electrical short-circuit occurs between the electrode terminal and the cap plate, rapidly deteriorating the battery and reducing battery capacity. Also, when such leakage occurs through a gap between a cap plate and electrode to the outside, the leaked electrolyte corrodes various structures installed outside the battery. Moreover, moisture from the outside may enter a case through such a gap.

### SUMMARY

An aspect of an embodiment of the present invention is directed toward a rechargeable battery for preventing (or protecting against) short-circuiting between an electrode terminal and a cap plate due to electrolyte leakage.
An embodiment of the present invention provides a rechargeable battery including: an electrode assembly including a first electrode plate, a second electrode plate, and a separator between the first electrode plate and the second electrode plate; a case housing the electrode assembly; a cap plate sealing the case; and an electrode terminal coupled to the electrode assembly and passing through the cap plate, wherein an insulation layer is on at least one of the cap plate or the electrode terminal, and wherein the rechargeable battery further comprises a lower insulator between the cap plate and the electrode terminal, wherein the insulation layer contacts the interior surface of the cap plate on one side and the lower insulator on the opposing side, and wherein the rechargeable battery further comprises an upper insulator contacting the exterior surface of the cap plate and the electrode terminal.

The insulation layer may include polypropylene or polyethylene.

The insulation layer may be on an interior-facing surface of the cap plate.

The insulation layer may be on an interior-facing surface of the cap plate proximate to the electrode terminal.

The electrode terminal may include: a terminal body passing through the cap plate; a terminal connector coupled to the terminal body, and facing an interior surface of the cap plate; and a terminal extension extending generally towards the electrode assembly from the terminal connector, and welded to the electrode assembly.

The insulation layer may be on an exterior-facing surface of the terminal connector.

The rechargeable battery may further include a seal gasket between the cap plate and the electrode terminal, wherein the insulation layer is on an exterior-facing surface of the terminal connector generally corresponding to the seal gasket.

The rechargeable battery may further include a lower insulator between the cap plate and the electrode terminal, wherein the insulation layer is on an exterior-facing surface of the terminal connector generally corresponding to the lower insulator.
The insulation layer may comprise two layers, a first insulation layer provided on an interior-facing surface of the cap plate and a second insulation layer provided on an exterior facing surface of the terminal connector, wherein the first insulation layer is positioned in a distance to the second insulation layer.

The rechargeable battery may further comprise a seal gasket between the cap plate and the electrode terminal, wherein the first insulation layer contacts the seal gasket.

The second insulation layer may be interposed between an exterior-facing surface of the terminal connector and the seal gasket.

### BRIEF DESCRIPTION OF THE DRAWINGS

The accompanying drawings, together with the specification, illustrate exemplary embodiments of the present invention, and, together with the description, serve to explain the principles of the present invention.

FIG. 1A illustrates a perspective view of a rechargeable battery according to an embodiment of the present invention.

FIG. 1B illustrates a cross-sectional view of a rechargeable battery taken along line I-I' in FIG. 1A.

FIG. 1C illustrates an enlarged view of region A in FIG. 1 B.

FIG. 2 illustrates a cross-sectional view of a rechargeable battery according to an embodiment of the present invention.

FIG. 3 illustrates a cross-sectional view of a rechargeable battery according to an embodiment of the present invention.

### DETAILED DESCRIPTION

In the following detailed description, only certain exemplary embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive.

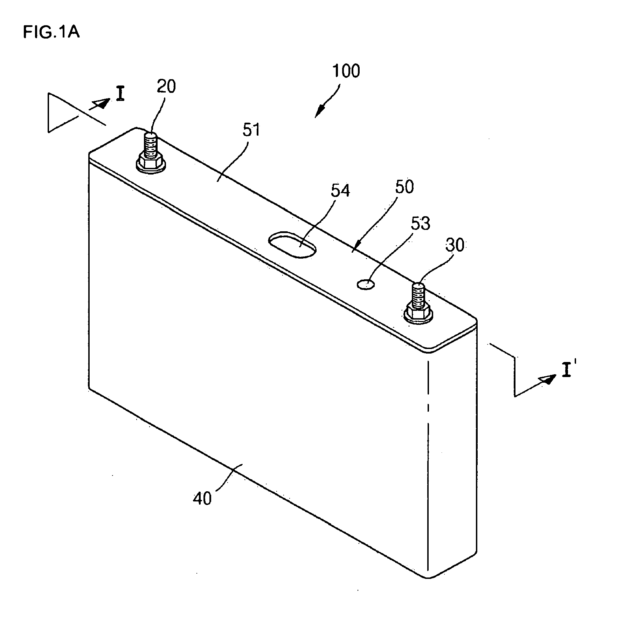

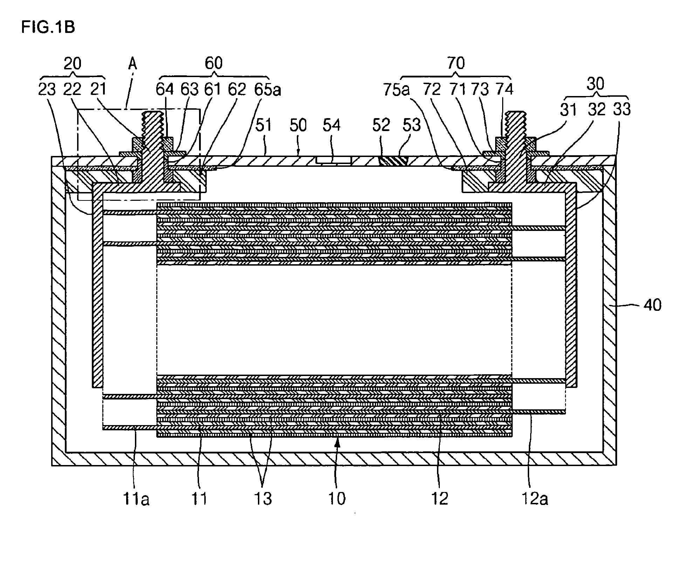

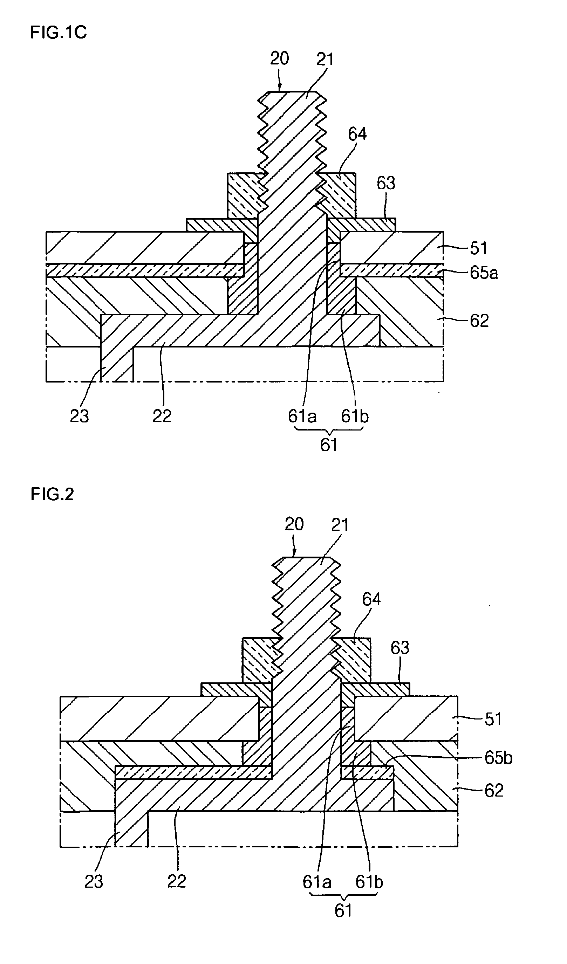

FIG. 1A illustrates a perspective view of a rechargeable battery according to an embodiment of the present invention, FIG. 1B illustrates a cross-sectional view of a rechargeable battery taken along line I-I' in FIG. 1A, and FIG. 1C illustrates an enlarged view of region A in FIG. 1B.

Referring to FIGS. 1 A to 1C, a rechargeable battery 100 according to an embodiment of the present invention includes an electrode assembly 10, a first electrode terminal 20, a second electrode terminal 30, a case 40, and a cap assembly 50.

The electrode assembly 10 is formed of a wound or layered stack of a first electrode plate 11 formed in a thin plate shape or a film shape, a separator 13, and a second electrode plate 12. Here, the first electrode plate 11 may function as an anode, and the second electrode plate 12 may function as a cathode.

The first electrode plate 11 is formed by applying a first electrode active material, such as a transition metal oxide, on a first electrode collector formed with a metal foil, such as aluminum, and includes a first electrode non-coating portion 11 a that is a region on which the first active material is not applied. The first electrode non-coating portion 11 a provides a passage for current flow between the first electrode plate 11 and the first electrode terminal 20. In embodiments of the present invention, the material used for the first electrode plate 11 is not limited thereto.

The second electrode plate 12 is formed by applying a second electrode active material, such as graphite or carbon, on a second electrode collector formed with a metal foil, such as nickel or copper, and includes a second electrode non-coating portion 12a that is a region on which the second active material is not applied. The second electrode non-coating portion 12a provides a passage for current flow between the second electrode plate 12 and the second electrode terminal 30. In embodiments, the material used for the second electrode plate 12 is not limited thereto.

The first electrode plate 11 and the second electrode plate 12 may be given different (or opposite) polarities and arranged on opposite sides of the separator 13.

The separator 13 is disposed between the first electrode plate 11 and the second electrode plate 12 to prevent (or protect from) short-circuiting and to enable movement of lithium ions, and is formed of PE (polyethylene), PP (polypropylene), or a compound film of PE and PP. In embodiments of the present invention, the material used for the separator 13 is not limited thereto.

A first electrode terminal 20 and a second electrode terminal 30 are coupled to the ends at either side of the electrode assembly 10 to be electrically coupled to the first electrode plates 11 and the second electrode plates 12, respectively.

The electrode assembly 10 is housed in the case 40 together with electrolyte. The electrolyte may be formed of a lithium salt, such as LiPF6 or LiBF4, in an organic solvent, such as EC, PC, DEC, EMC, or DMC. Also, the electrolyte may be in a liquid, solid, or gel phase.

If the electrolyte infiltrates the region between the first electrode terminal 20 and the cap assembly 50, or the second electrode terminal 30 and the cap assembly 50, it may cause an electrical short to occur between the first electrode terminal 20 and the cap assembly 50, or the second electrode terminal 30 and the cap assembly 50.

Because the first electrode terminal 20 is formed of a conductive material, such as aluminum, and is welded to the first electrode non-coating portions 11 a projecting from ends at one side of the electrode assembly 10, it is electrically coupled to the first electrode plates 11. The first electrode terminal 20 includes a first terminal body 21, a first terminal connector 22, and a first terminal extension 23.

The first terminal body 21 is passed through the cap assembly 50 and fixed to the cap assembly 50. Also, the first terminal body 21 has screw threads defined in its upper portion.

The first terminal connector 22 extends horizontally from the first terminal body 21 and is disposed at the undersurface (interior-facing surface) of the cap assembly 50.

The first terminal extension 23 extends vertically from the end of the first terminal connector 22 and is pressed against the first electrode non-coating portions 11 a of the electrode assembly 10. That is, the first terminal extension 23 may be welded to the first terminal non-coating portions 11 a.

Because the second electrode terminal 30 is formed of a conductive material, such as nickel, and is welded to the second electrode non-coating portions 12a projecting from an end at the other side of the electrode assembly 10, it is electrically coupled to the second electrode plates 12. The second electrode terminal 30 includes a second terminal body 31, a second terminal connector 32, and a second terminal extension 33.

Because the second terminal body 31, second terminal connector 32, and second terminal extension 33 of the second electrode terminal 30 have the same configurations and perform the same functions as the first terminal body 21, first terminal connector 22, and first terminal extension 23 of the first electrode terminal 20, repetitive description will not be provided.

The case 40 is formed of a conductive metal, such as aluminum, an aluminum alloy, or nickel-plated steel, and is configured in an approximately hexahedral shape with an opening for housing the electrode assembly 10, the first electrode terminal 20, the second electrode terminal 30, and electrolyte. While the opening is not shown in FIGS. 1A and 1B, in which the case 40 and cap assembly 50 are shown coupled, the edge portion of the cap assembly 50 is actually an open portion (or has an opening). The inner surface of the case 40 is insulation-treated to be electrically insulated from the electrode assembly 10, first electrode terminal 20, and second electrode terminal 30.

The cap assembly 50 is coupled to the case 40. The cap assembly 50 includes a cap plate 51. The cap plate 51 seals the opening of the case 40, and may be formed of the same material as the case 40. Also, the cap plate 51 includes a plug 53 that seals an electrolyte injection hole 52, and a safety vent 54 that is comparatively thinner.

Also, the cap assembly 50 includes a first sealing portion 60 and a second sealing portion 70.

The first sealing portion 60 includes a first seal gasket 61 through which the first terminal body 21 of the first electrode terminal 20 passes, a first lower insulator 62, a first upper insulator 63, a first nut 64, and a first insulation layer 65a.

Moreover, the second sealing portion 70 includes a second seal gasket 71 through which the second terminal body 31 of the second electrode terminal 30 passes, a second lower insulator 72, a second upper insulator 73, a second nut 74, and a second insulation layer 75a.

Here, the first sealing portion 60 and the second sealing portion 70 are configured the same, and therefore, a description centered around only the configuration of the first sealing portion 60 will be provided below. Further, in the description below, nomenclature will be shortened so that the first electrode terminal 20 will be electrode terminal 20, the first terminal body 21 will be terminal body 21, the first terminal connector 22 will be terminal connector 22, the first terminal extension 23 will be terminal extension 23, the first seal gasket 61 will be seal gasket 61, the first lower insulator 62 will be lower insulator 62, the first upper insulator 63 will be upper insulator 63, the first nut 64 will be nut 64, and the first insulation layer 65a will be insulation layer 65a.

As illustrated in FIG. 1C, the seal gasket 61 is interposed between the electrode terminal 20 and the cap plate 51, to prevent electrical shorts from occurring between the electrode terminal 20 and the cap plate 51. The material of the seal gasket 61 for this purpose is an insulator.

The seal gasket 61 includes a body 61 a and a flange 61 b. The body 61 a encloses the periphery of the terminal body 21 in an approximately tubular shape, in order to prevent (or protect) the terminal body 21 from electrically short-circuiting with the cap plate 51. Also, the flange 61 b is bent to extend horizontally and outward from the body 61 a for a length (e.g., a certain length), and is pressed against the bottom undersurface of the cap plate 51. That is, the flange 61 b is disposed between the undersurface of the cap plate 51 and the terminal connector 22. The seal gasket 61 prevents (or protects) external moisture from infiltrating the case 40 through the cap plate 51.

The lower insulator 62, at the exterior of the flange 61 b, is pressed against the undersurface of the cap plate 51. Further, a portion of the exterior of the lower insulator 62 is pressed between the terminal connector 22 and the cap plate 51.

The upper insulator 63 is coupled to the terminal body 21 of the electrode terminal 20 and pressed against the top surface of the cap plate 51.

The nut 64 is fastened along the screw threads formed on, preferably directly on the electrode terminal 20 to fix the electrode terminal 20 to the cap plate 51. Also, the nut 64 is fastened along the screw threads and pressed against the upper insulator 63.

The insulation layer 65a is formed on, preferably directly on the undersurface of the cap plate 51. The insulation layer 65a may also be formed on, preferably directly on a portion of the undersurface of the cap plate 51 corresponding to the electrode terminal 20. The insulation layer 65a may be formed of PP (polypropylene), PE (polyethylene), or a suitable equivalent material that does not react with electrolyte. That is, the insulation layer 65a may be formed by coating PP or PE on the undersurface of the cap plate 51.

Also, the insulation layer 65a is disposed between the cap plate 51 and the electrode terminal 20, to prevent (or protect from) an electrical short occurring between the cap plate 51 and the electrode terminal 20 if electrolyte leaks between the cap plate 51 and the electrode terminal 20. In further detail, the insulation layer 65a is formed on, preferably directly on the undersurface of the cap plate 51, to prevent electrical shorts from occurring (or protect electrical shorts from occurring) between the cap plate 51 and electrode terminal 20 if electrolyte leaks between the seal gasket 61 and the lower insulator 62.

Thus, by having the insulation layer 65a formed on, preferably directly on the undersurface of the cap plate 51, a rechargeable battery 100 according to an embodiment does not experience short-circuiting between the cap plate 51 and the electrode terminal 20, even when electrolyte leaks through a gap between the seal gasket 61 and the lower insulator 62. Accordingly, a rechargeable battery 100 according to an embodiment can prevent (or protect from) electrical shorts between the electrode terminal 20 and cap plate 51.

Further, by having the insulation layer 65a formed on, preferably directly on the undersurface of the cap plate 51, the rechargeable battery according to an embodiment can prevent (or protect from) corrosion of the cap plate 51 from electrolyte.

Next, a description will be provided of a rechargeable battery according to another embodiment.

FIG. 2 illustrates a cross-sectional view of a rechargeable battery according to an embodiment.

Compared to the rechargeable battery 100 shown in FIG. 1, a rechargeable battery according to an embodiment of the present invention is different only in the location in which an insulation layer 65, represented in Fig. 2 by the reference number 65b, is formed, and otherwise has the same form and performs the same functions. Thus, description that is repetitive of like elements in a rechargeable battery according to another embodiment will not be provided, and description will be centered around the insulation layer 65b.

Referring to FIG. 2, the insulation layer 65b is formed on, preferably directly on the electrode terminal 20. More particularly, the insulation layer 65b is formed on, preferably directly on the top (exterior facing) surface of the terminal connector 22 of the electrode terminal 20.

Here, the insulation layer 65b is interposed between a seal gasket 61 and the terminal connector 22, and is formed on, preferably directly on the top surface of the terminal connector 22 such that the lower surface of the seal gasket 61 does not contact the terminal connector 22. In other words, the insulation layer 65b is interposed between the lower surface of the seal gasket 61 and the upper surface of the terminal connector 22. The insulation layer 65b is also interposed between the lower insulator 62 and the terminal connector 22, and is formed on, preferably directly on the top surface of the terminal connector 22 contacting the lower insulator 62. In other words, the lower insulator 62 does not contact the upper surface of the terminal connector 22. The insulation layer 65b may be formed of PP, PE, or a suitable equivalent thereof that does not react with electrolyte. That is, the insulation layer 65b may be formed by coating PP or PE on the top surface of the terminal connector 22.

The insulation layer 65b is disposed between the cap plate 51 and the electrode terminal 20, to prevent (or protect from) electrical short-circuiting between the cap plate 51 and terminal electrode 20 if electrolyte leaks through a gap between the cap plate 51 and the electrode terminal 20. In further detail, the insulation layer 65b is formed on, preferably directly on the top surface of the terminal connector 22, to prevent an electrical short from occurring (or to protect from an electrical short occurring) between the cap plate 51 and electrode terminal 20 if electrolyte leaks through a gap between the seal gasket 61 and the lower insulator 62.

Thus, because the insulation layer 65b is formed on, preferably directly on the top surface of the terminal connector 22, the rechargeable battery according to an embodiment of the present invention does not suffer short-circuiting between the cap plate 51 and electrode terminal 20, even if electrolyte leaks through a gap between the seal gasket 61 and the lower insulator 62. Accordingly, a rechargeable battery according to an embodiment of the present invention prevents (or protects from) short-circuiting between the electrode terminal 20 and the cap plate 51.

Also, because the insulation layer 65b is formed on, preferably directly on the top surface of the terminal connector 22 in the rechargeable battery according to an embodiment of the present invention, electrolyte can be prevented (or protected) from corroding the terminal connector 22.

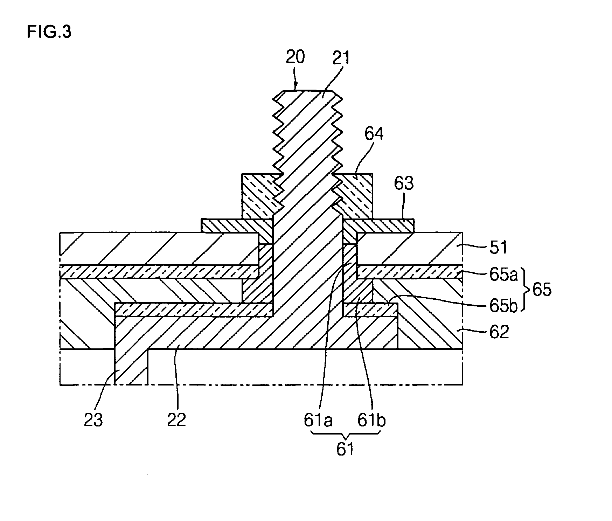

FIG. 3 illustrates a cross-sectional view of a rechargeable battery according to an embodiment of the present invention.

Referring to FIG. 3, an insulation layer 65 includes an upper insulation layer 65a and a lower insulation layer 65b. The insulation layer 65 may be formed by coating PP or PE that does not react with electrolyte.

The upper insulation layer 65a is formed on, preferably directly on the undersurface of the cap plate 51. The upper insulation layer 65a may also be formed on, preferably directly on a portion of the undersurface of the cap plate 51 corresponding to the electrode terminal 20.

The lower insulation layer 65b is formed on, preferably directly on the electrode terminal 20. In further detail, the lower insulation layer 65b is formed on, preferably directly on the top surface of the terminal connector 22 of the electrode terminal 20. Here, the lower insulation layer 65b is interposed between the seal gasket 61 and the terminal connector 22, and formed on, preferably directly on the top surface of the terminal connector 22 corresponding to the seal gasket 61. Also, the lower insulation layer 65b is interposed between the lower insulator 62 and the terminal connector 22, and formed on, preferably directly on the top surface of the terminal connector 22 corresponding to the lower insulator 62.

Specifically, the insulation layer 65 is disposed between the cap plate 51 and the electrode terminal 20, to prevent (or protect from) electrical short-circuiting between the cap plate 51 and electrode terminal 20 if electrolyte leaks through a gap between the cap plate 51 and electrode terminal 20.

Thus, by forming the insulation layer 65 on, preferably directly on the undersurface of the cap plate 51 and the top surface of the terminal connector 22 in a rechargeable battery according to an embodiment of the present invention, a short will not occur (or a short is less likely to occur) between the cap plate 51 and electrode terminal 20 even when electrolyte leaks through a gap between the seal gasket 61 and lower insulator 62. Accordingly, a rechargeable battery according to an embodiment is protected from electrical short-circuits between the electrode terminal 20 and cap plate 51.

A rechargeable battery according to an embodiment of the present invention is formed with an insulation layer on, preferably directly on at least one of a cap plate or electrode terminal, so that even if electrolyte leaks through a gap between a seal gasket and a lower insulator, the cap plate and the electrode terminal will not short-circuit. Accordingly, a rechargeable battery according to an embodiment prevents electrical shorts from occurring (or protects from electrical shorts occurring) between an electrode terminal and a cap plate.

While aspects of the present invention have been described in connection with certain exemplary embodiments, it is to be understood that the invention is not limited to the disclosed embodiments, but, on the contrary, is intended to cover various modifications and equivalent arrangements included within the scope of the appended claims, and equivalents thereof.

## Claims

1. A rechargeable battery comprising:
an electrode assembly (10) comprising a first electrode plate (11), a second electrode plate (12), and a separator (13) between the first electrode plate (11) and the second electrode plate (12);
a case (40) housing the electrode assembly (10);
a cap plate (51) sealing the case (40); and
at least one electrode terminal (20) coupled to the electrode assembly (10) and passing through the cap plate (51),
wherein an insulation layer (65) is provided on at least one of the cap plate (51) or the electrode terminal (20), and wherein the rechargeable battery further comprises a lower insulator (62) between the cap plate (51) and the electrode terminal (20), wherein the insulation layer (65) contacts the interior surface of the cap plate (51) on one side and the lower insulator (62) on the opposing side, and
wherein the rechargeable battery further comprises an upper insulator (63) contacting the exterior surface of the cap plate (51) and the electrode terminal (20).

2. The rechargeable battery as claimed in claim 1, wherein the insulation layer (65) comprises polypropylene or polyethylene.

3. The rechargeable battery as claimed in claim 1 or 2, wherein the insulation layer (65) is provided on an interior-facing surface of the cap plate (51).

4. The rechargeable battery as claimed in one of the previous claims, further comprising a seal gasket (61) between the cap plate (51) and the electrode terminal (20), wherein the insulation layer (65) contacts the seal gasket (61).

5. The rechargeable battery as claimed in claim 1 or 2, wherein the electrode terminal (20) comprises:
a terminal body (21) passing through the cap plate (51);
a terminal connector (22) coupled to the terminal body (21), and facing an interior surface of the cap plate (51); and
a terminal extension (23) extending generally towards the electrode assembly (10) from the terminal connector (22), and welded to the electrode assembly (10).

6. The rechargeable battery as claimed in claim 5, wherein the insulation layer (65) is provided on an exterior-facing surface of the terminal connector (22).

7. The rechargeable battery as claimed in claim 5 or 6, further comprising a seal gasket (61) between the cap plate (51) and the electrode terminal (20), wherein the insulation layer (65) is interposed between an exterior-facing surface of the terminal connector (22) and the seal gasket (61).

8. The rechargeable battery as claimed in claim 7, wherein the seal gasket (61) comprises a body (61 a) and a flange (61 b), wherein the body (61 a) contacts the electrode terminal (20) and wherein the flange (61 b) contacts the interior surface of the cap plate (51).

9. The rechargeable battery as claimed in claim 5, wherein the insulation layer (65) comprises two layers, a first insulation layer (65a) provided on an interior-facing surface of the cap plate (51) and a second insulation layer (65b) provided on an exterior facing surface of the terminal connector (22), wherein the first insulation layer (65a) is positioned in a distance to the second insulation layer (65b).

10. The rechargeable battery as claimed in claim 9, further comprising a seal gasket (61) between the cap plate (51) and the electrode terminal (20), wherein the first insulation layer (65a) contacts the seal gasket (61).

11. The rechargeable battery as claimed in claim 10, wherein the second insulation layer (65b) is interposed between an exterior-facing surface of the terminal connector (22) and the seal gasket (61).

12. The rechargeable battery as claimed in one of claims 9 to 11, further comprising a lower insulator (62) between the cap plate (51) and the electrode terminal (10), wherein the second insulation layer (65b) is interposed between an exterior-facing surface of the terminal connector (22) and the lower insulator (62).

## Patentansprüche

1. Wiederaufladbare Batterie, umfassend:
eine Elektrodenanordnung (10) umfassend eine erste Elektrodenplatte (11), eine zweite Elektrodenplatte (12) sowie einen Separator (13) zwischen der ersten Elektrodenplatte (11) und der zweiten Elektrodenplatte (12);
ein die Elektrodenanordnung (10) aufnehmendes Gehäuse (40);
eine das Gehäuse (40) verschließende Abdeckplatte (51); und
mindestens eine Elektrodenklemme (20), die mit der Elektrodenanordnung (10) verbunden ist und durch die Abdeckplatte (51) hindurchgeführt ist,
wobei eine Isolierschicht (65) an mindestens der Abdeckplatte (51) oder der Elektrodenklemme (20) vorgesehen ist, und wobei die wiederaufladbare Batterie ferner einen unteren Isolator (62) zwischen der Abdeckplatte (51) und der Elektrodenklemme (20) umfasst, wobei die Isolierschicht (65) die Innenfläche der Abdeckplatte (51) auf einer Seite und den unteren Isolator (62) auf der gegenüberliegenden Seite kontaktiert, und
wobei die wiederaufladbare Batterie ferner einen oberen Isolator (63) umfasst, der die Außenfläche der Abdeckplatte (51) und die Elektrodenklemme (20) kontaktiert.

2. Wiederaufladbare Batterie nach Anspruch 1, wobei die Isolierschicht (65) Polypropylen oder Polyethylen umfasst.

3. Wiederaufladbare Batterie nach Anspruch 1 oder 2, wobei die Isolierschicht (65) auf einer nach innen weisenden Fläche der Abdeckplatte (51) vorgesehen ist.

4. Wiederaufladbare Batterie nach einem der vorstehenden Ansprüche, ferner umfassend eine Dichtung (61) zwischen der Abdeckplatte (51) und der Elektrodenklemme (20), wobei die Isolierschicht (65) die Dichtung (61) kontaktiert.

5. Wiederaufladbare Batterie nach Anspruch 1 oder 2, wobei die Elektrodenklemme (20) umfasst:
einen durch die Abdeckplatte (51) hindurchgeführten Klemmenkörper (21);
einen mit dem Klemmenkörper (21) verbunden Klemmenverbinder (22), der zu einer Innenfläche der Abdeckplatte (51) weist; und
eine Klemmenerweiterung (23), die sich im Allgemeinen von dem Klemmenverbinder (22) zur Elektrodenanordnung (10) erstreckt und mit der Elektrodenanordnung (10) verschweißt ist.

6. Wiederaufladbare Batterie nach Anspruch 5, wobei die Isolierschicht (65) auf einer nach außen weisenden Fläche des Klemmenverbinders (22) vorgesehen ist.

7. Wiederaufladbare Batterie nach Anspruch 5 oder 6, ferner umfassend eine Dichtung (61) zwischen der Abdeckplatte (51) und der Elektrodenklemme (20), wobei die Isolierschicht (65) zwischen einer nach außen weisenden Fläche des Klemmenverbinders (22) und der Dichtung (61) angeordnet ist.

8. Wiederaufladbare Batterie nach Anspruch 7, wobei die Dichtung (61) einen Körper (61a) und einen Flansch (61b) umfasst, wobei der Körper (61 a) die Elektrodenklemme (20) kontaktiert und wobei der Flansch (61 b) die Innenfläche der Abdeckplatte (51) kontaktiert.

9. Wiederaufladbare Batterie nach Anspruch 5, wobei die Isolierschicht (65) zwei Schichten umfasst, eine erste Isolierschicht (65a), die auf einer nach innen weisenden Fläche der Abdeckplatte (51) vorgesehen ist, und eine zweite Isolierschicht (65b), die auf einer nach außen weisenden Fläche des Klemmenverbinders (22) vorgesehen ist, wobei die erste Isolierschicht (65a) mit einem Abstand zur zweiten Isolierschicht (65b) positioniert ist.

10. Wiederaufladbare Batterie nach Anspruch 9, ferner umfassend eine Dichtung (61) zwischen der Abdeckplatte (51) und der Elektrodenklemme (20), wobei die erste Isolierschicht (65a) die Dichtung (61) kontaktiert.

11. Wiederaufladbare Batterie nach Anspruch 10, wobei die zweite Isolierschicht (65b) zwischen einer nach außen weisenden Fläche des Klemmenverbinders (22) und der Dichtung (61) angeordnet ist.

12. Wiederaufladbare Batterie nach einem der Ansprüche 9 bis 11, ferner umfassend einen unteren Isolator (62) zwischen der Abdeckplatte (51) und der Elektrodenklemme (10), wobei die zweite Isolierschicht (65b) zwischen einer nach außen weisenden Fläche des Klemmenverbinders (22) und dem unteren Isolator (62) angeordnet ist.

## Revendications

1. Batterie rechargeable comprenant :
un assemblage d'électrodes (10) comprenant une première plaque d'électrode (11), une seconde plaque d'électrode (12) et un séparateur (13) entre la première plaque d'électrode (11) et la seconde plaque d'électrode (12) ;
un boîtier (40) renfermant l'assemblage d'électrodes (10) ;
une plaque de couvercle (51) obturant hermétiquement le boîtier (40) ; et
au moins une borne d'électrode (20) couplée à l'assemblage d'électrodes (10) et passant à travers la plaque de couvercle (51),
dans laquelle une couche isolante (65) est fournie sur au moins l'une de la plaque de couvercle (51) et de la borne d'électrode (20), ladite batterie rechargeable comprenant en outre un isolant inférieur (62) entre la plaque de couvercle (51) et la borne d'électrode (20), la couche isolante (65) entrant en contact avec la surface intérieure de la plaque de couvercle (51) d'un côté et l'isolant inférieur (62) du côté opposé, et
la batterie rechargeable comprenant en outre un isolant supérieur (63) entrant en contact avec la surface extérieure de la plaque de couvercle (51) et la borne d'électrode (20).

2. Batterie rechargeable suivant la revendication 1, dans laquelle la couche isolante (65) comprend du polypropylène ou du polyéthylène.

3. Batterie rechargeable suivant la revendication 1 ou 2, dans laquelle la couche isolante (65) est fournie sur une surface tournée vers l'intérieur de la plaque de couvercle (51).

4. Batterie rechargeable suivant l'une des revendications précédentes, comprenant en outre une garniture d'étanchéité (61) entre la plaque de couvercle (51) et la borne d'électrode (20), dans laquelle la couche isolante (65) entre en contact avec la garniture d'étanchéité (61).

5. Batterie rechargeable suivant la revendication 1 ou 2, dans laquelle la borne d'électrode (20) comprend :
un corps de borne (21) passant à travers la plaque de couvercle (51) ;
un connecteur de borne (22) couplé au corps de borne (21), et tourné vers une surface intérieure de la plaque de couvercle (51) ; et
une extension de borne (23) s'étendant généralement vers l'assemblage d'électrodes (10) à partir du connecteur de borne (22), et soudée à l'assemblage d'électrodes (10).

6. Batterie rechargeable suivant la revendication 5, dans laquelle la couche isolante (65) est fournie sur une surface tournée vers l'extérieur du connecteur de borne (22).

7. Batterie rechargeable suivant la revendication 5 ou 6, comprenant en outre une garniture d'étanchéité (61) entre la plaque de couvercle (51) et la borne d'électrode (20), dans laquelle la couche isolante (65) est interposée entre une surface tournée vers l'extérieur du connecteur de borne (22) et la garniture d'étanchéité (61).

8. Batterie rechargeable suivant la revendication 7, dans laquelle la garniture d'étanchéité (61) comprend un corps (61a) et une bride (61b), dans laquelle le corps (61a) entre en contact avec la borne d'électrode (20) et dans laquelle la bride (61b) entre en contact avec la surface intérieure de la plaque de couvercle (51).

9. Batterie rechargeable suivant la revendication 5, dans laquelle la couche isolante (65) comprend deux couches, une première couche isolante (65a) fournie sur une surface tournée vers l'intérieur de la plaque de couvercle (51) et une seconde couche isolante (65b) fournie sur une surface tournée vers l'extérieur du connecteur de borne (22), dans laquelle la première couche isolante (65a) est positionnée à distance de la seconde couche isolante (65b).

10. Batterie rechargeable suivant la revendication 9, comprenant en outre une garniture d'étanchéité (61) entre la plaque de couvercle (51) et la borne d'électrode (20), dans laquelle la première isolante (65a) entre en contact avec la garniture d'étanchéité (61).

11. Batterie rechargeable suivant la revendication 10, dans laquelle la seconde couche isolante (65b) est interposée entre une surface tournée vers l'extérieur du connecteur de borne (22) et la garniture d'étanchéité (61).

12. Batterie rechargeable suivant l'une des revendications 9 à 11, comprenant en outre un isolant inférieur (62) entre la plaque de couvercle (51) et la borne d'électrode (10), dans laquelle la seconde couche isolante (65b) est interposée entre une surface tournée vers l'extérieur du connecteur de borne (22) et l'isolant inférieur (62).
